# EUROPEAN PATENT SPECIFICATION

(11) **EP 2 909 545 B1**
(45) Date of publication and mention of the grant of the patent: **08.08.2018**
(21) Application number: 13847162.8
(22) Date of filing: 18.10.2013
(51) Int. Cl.: F24S 20/40, F24S 23/71, F24S 10/70, F24S 23/79

(54) **COMBINATION SOLAR AND COMBUSTION HEATER**
KOMBINATION AUS SOLAR-UND VERBRENNUNGSHEIZER
ÉLÉMENT CHAUFFANT SOLAIRE ET À COMBUSTION EN COMBINAISON

(30) Priority: 18.10.2012 US 201261715341 P
(43) Date of publication of application: 26.08.2015
(73) Proprietor: Thermolift Inc., Stony Brook, NY 11794-6044 (US)
(72) Inventor: HOFBAUER, Peter, West Bloomfield, MI 48324 (US); KAPPAUF, Todd, Dearborn, MI 48120 (US)
(74) Representative: Jones, David Alan
(86) International application number: PCT/US2013/065582
(87) International publication number: WO 2014/063001

(56) References cited:
- WO-A1-03/076766
- WO-A1-2011/141862
- CN-A- 102 226 449
- DE-A1- 10 343 861
- KR-A- 20020 024 245
- US-A- 4 070 861
- US-A- 5 245 986
- US-A- 5 531 969
- US-A1- 2009 260 360
- US-A1- 2009 277 441
- US-A1- 2010 330 511

## Description

### Field

The present disclosure relates to a heater assembly that combines a solar concentrator and a burner.

### Background

It is desirable to supplant nonrenewable resources, such as natural gas, with renewable sources such as solar. Solar, however, is diurnal. Either a large storage system is provided or the solar is supplemented. It is known to use a burner to supplement solar, such as is described in U.S. 4,328,791. A gas burner provides heat only in the event that the solar heating is insufficient. In '791, a water tank is provided with supply and return connectors for circulating water from the tank to a solar collector and back to the tank. A gas heater is disposed within the upper half of the tank by solar energy. The two heating devices are displaced from each other. It is desirable to have a more simplified heating system. US5,245,986 describes a solar receiver in which solar energy is used to heat a solar absorber comprising a plurality of parallel steel wires. Ambient air is heated by causing the air to flow across the solar absorber.

### Summary

To provide at least one desired feature, a heater assembly in accordance with claim 1 is disclosed that includes: a window having an outer surface and an inner surface, a solar concentrator having a collection area many times greater than an area of the window, a heat exchanger that is arranged closer to the inner surface of the window, and a fuel-and-air delivery chamber defined by the inner surface of the window, a first surface of the heat exchanger, and a side wall of the delivery chamber with an inlet for fuel and air defined in the side wall of the delivery chamber. Most of the sun rays that impact the solar concentrator are reflected onto the outer surface of the window.

The heat exchanger comprises at least one tube arranged in a spiral with a distance between adjacent tubes displaced less than equal to a quench distance of the fuel and air. The heat exchanger may be alternatively be configured in any suitable formation.

The heater assembly also includes a combustion chamber defined by a second surface of the heat exchanger, a side wall of the combustion chamber, and a bottom wall with an outlet for exhaust gases defined in one of the side wall and the bottom wall of the combustion chamber and an ignitor disposed in the combustion chamber. The assembly further includes: a fuel supply duct coupled to an inlet of the fuel-and-air delivery chamber, an air supply duct coupled to the inlet of the fuel-and-air delivery chamber, a fuel valve disposed in the fuel supply duct, and an electronic control unit electronically coupled to the fuel valve and the ignitor.

The heat exchanger has at least one tube adapted to carry a working fluid, the tube is arranged in a spiral, and the tube has an inlet and an outlet. A temperature-measuring device is disposed in the outlet of the tube. An electronic control unit (ECU) is electronically coupled to the temperature measuring device and the fuel valve. The ECU controls the fuel valve based on the temperature at the outlet of the tube.

The window and the heat exchanger are substantially flat and parallel to each other. In one embodiment, the solar concentrator has a concave reflective parabolic ring adapted to reflect incoming solar rays onto the window, a convex reflective parabolic disk disposed opposite the upper surface of the window, and a concave reflective parabolic bowl disposed inside the reflective parabolic ring. The parabolic bowl is adapted to reflect incoming solar rays onto the parabolic disk and the parabolic disk is adapted to reflect incoming solar rays from the parabolic bowl onto the window.

Also disclosed is a method to operate a heater assembly in accordance with claim 1, the method comprising: supplying working fluid to the at least one tube of the heat exchanger; utilizing the solar concentrator to transmit the sun's rays to the heat exchanger; supplying fuel and air into the fuel-and-air delivery chamber of the heat exchanger through the fuel-and-air inlet; and igniting within the combustion chamber the fuel and air drawn through the gaps in the heat exchanger.

The method may further include adjusting the flow rate of fuel and air based on the desired heating demand.

When the fuel flow is very low, it may be difficult to sustain combustion and it indicates that the insolation, i.e., the amount of solar radiation reaching the surface (the heat exchanger, in this case), is sufficient to meet the demand. The method further includes
determining whether the fuel valve is nearly turned off. If so, the fuel valve is commanded to close. In an embodiment with a heliostat, the method includes positioning a mirror of the heliostat substantially parallel to the heat exchanger when it is determined that it is night time.

Prior systems have provided a fuel-fired burner as a backup to solar energy. The present disclosure improves on prior systems by having the burner and the solar concentrator acting upon the same element thereby avoiding additional components and sources for loss.

### Brief Description of the Drawings

Figure 1 is an illustration of a heater according to an embodiment of the present disclosure;
Figure 2 is a plan view of the heat exchanger of Figure 1;
Figure 3 is a plan view of the solar concentrator of Figure 1;
Figure 4 is an illustration of a heliostat configuration to reflect rays into a solar concentrator;
Figure 5 is an illustration of the burner and an electronic control unit to control the burner;
Figure 6 is an embodiment of a solar concentrator with the incident solar rays vertical;
Figure 7 is the solar concentrator of Figure 6 in which the incident solar rays are displaced by an angle with respect to vertical;
Figure 8 is an illustration of a Vuilleumier heat pump, an example of one device that can be combined with the heater disclosed herein; and
Figure 9 is a flowchart illustrating one embodiment of operation of the heater.

### Detailed Description

As those of ordinary skill in the art will understand, various features of the embodiments illustrated and described with reference to any one of the Figures may be combined with features illustrated in one or more other Figures to produce alternative embodiments that are not explicitly illustrated or described. The combinations of features illustrated provide representative embodiments for typical applications. However, various combinations and modifications of the features consistent with the teachings of the present disclosure may be desired for particular applications or implementations. Those of ordinary skill in the art may recognize similar applications or implementations whether or not explicitly described or illustrated.

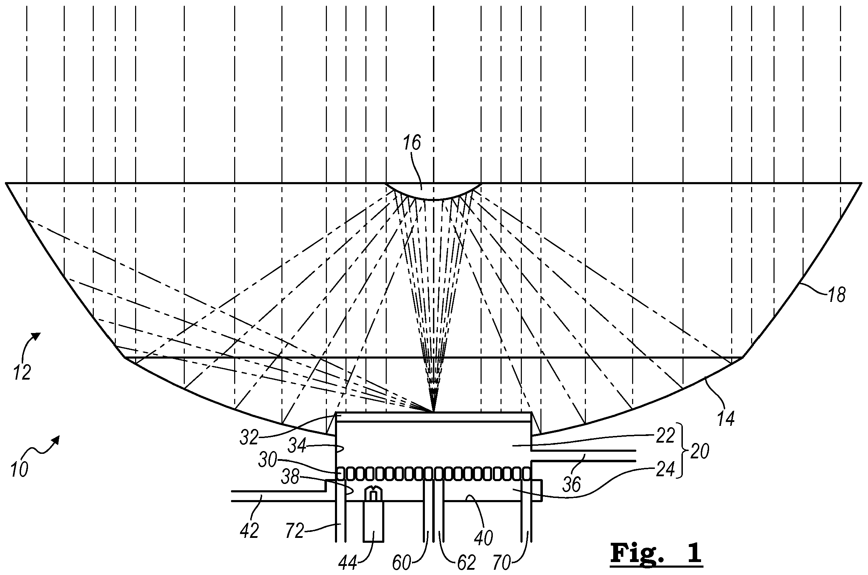

A heater assembly 10 is shown in Figure 1. Heater assembly 10 has a solar concentrator 12. Solar concentrator 12 has a concave reflective parabolic bowl 14 portion that reflects the sun's parallel rays to a convex reflective parabolic disk 16 portion. Disk 16 reflects the sun's rays downwardly. Solar concentrator 12 also includes a convex reflective parabolic ring 18.

Heater assembly 10 also includes a burner that is enclosed in a chamber 20. Chamber 20 has two portions: a fuel-and-air delivery chamber 22 and a combustion chamber 24 that is separated by a heat exchanger 30. Fuel-and-air delivery chamber 22 is defined by a window 32, heat exchanger 30, and a side wall 34. Defined in side wall 34 is a fuel-and-air inlet 36. Combustion chamber 24 is defined by heat exchanger 30, a side wall 38 and a bottom wall 40. Exhaust exits combustion chamber 24 via an outlet 42 defined in side wall 38. Alternatively, outlet 42 exits through bottom wall 40.

In one embodiment, window 32 is a quartz crystal due to quartz's desirable optical properties. Any suitable material that is highly transparent to visible and UV light, substantially opaque to infrared, and withstands higher temperatures due to the proximity to the burner can be an alternative.

The sun's rays that hit parabolic bowl 14 reflect toward parabolic disk 16 and are directed onto window 32 and transmitted to heat exchanger 30. The sun's rays that hit parabolic ring 18 are directed onto window 32 and transmitted to heat exchanger 30. The embodiment shown in Figure 1 is one non-limiting example configuration.

Fuel and air supplied through inlet 36 are drawn into air-and-fuel delivery chamber 22 through gaps in heat exchanger 30 into combustion chamber 24. An ignitor 44 can be used to start combustion. After combustion is established, combustion occurs at the heat exchanger 30. Gaps in heat exchanger 30 are carefully sized to be smaller than the quench distance. By ensuring the gaps are sufficiently small, flash back into fuel-and-air delivery chamber 22 is prevented.

Quench distance is commonly defined as a width or a diameter through which a flame will not propagate. The quench distance depends on the geometry, (e.g., whether a slot or a tube) and the stoichiometry of the fuel-air mixture, primarily, with other secondary effects such as fuel type, the material around the gap, and temperature. For the present situation, the quench distance is determined for the operating condition anticipated which yields the smallest quench distance and is on the order of 0.5 mm. The gaps between adjacent tubes are spaced such that they are smaller than the determined quench distance throughout heat exchanger 30.

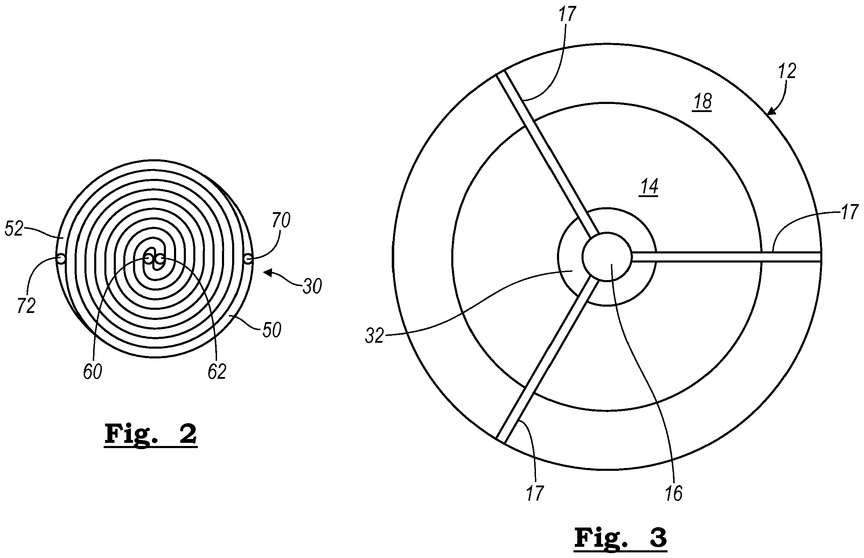

Heat exchanger 30, shown in plan view in Figure 2, has two tubes 50 and 52 that are entwined in a spiral. Inlets 60 and 62 and outlets 70 and 72 are provided to tubes 50 and 52, respectively. The embodiment of heat exchanger 30 in Figures 1 and 2 is one non-limiting example showing two outlets to provide two supplies of heated working fluid evenly distributed. Alternatively, only one tube could be used. Or, more tubes could be used to branch out the heated working fluid even more.

In Figure 3, a plan view of solar concentrator 12 is shown. Parabolic ring 18 surrounds parabolic bowl. Window 32 is at the center. Parabolic disk 16 is supported by arms 17. Such a configuration provides a more compact solar concentrator than if parabolic ring were to extend further into the center of the device. The embodiment shown in Figures 1 and 3 is one non-limiting example of a solar concentrator. Other configurations could be substituted.

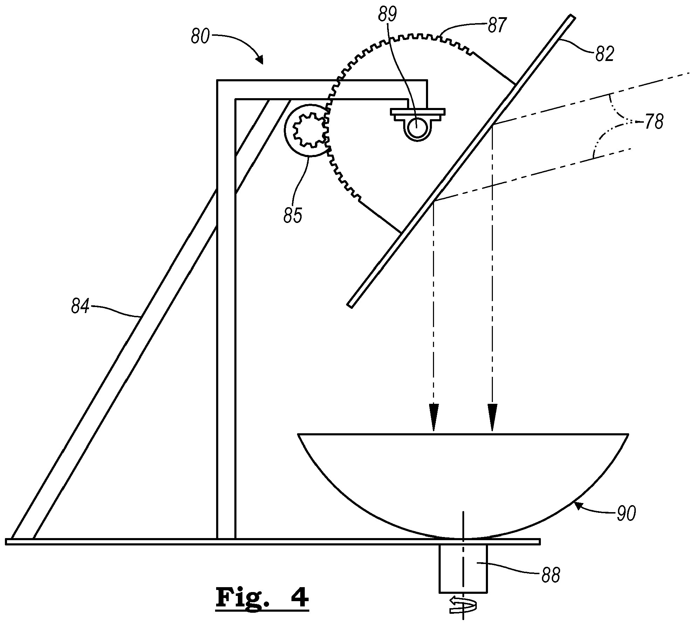

In Figure 1, parallel rays are shown entering solar concentrator 12 in a vertical direction. However, the sun is directly overhead only momentarily in particular geographical locations during certain seasons. To collect the sun's rays throughout the daylight hours, either the position of heater 10 is moved to track the position of the sun or a heliostat is used to cause the sun's rays to be reflected vertically. A heliostat embodiment he is shown in Figure 4. Parallel solar rays 78 are arriving at an angle displaced from vertical. A mirror 82 is provided which reflect the rays into a vertical column into solar concentrator 90. Mirror 82 is attached to a frame 84 via a geared system. The angle of mirror 82 moves with respect to a pivot point 89 when a small gear motor 85 rotates. Teeth of small gear motor 85 engage with a gear 87 coupled to mirror 82. A motor 88 also attached to frame 84 causes the heliostat to rotate with respect to the centerline of motor 88. Heliostat 80 is one example of suitable arrangements for directing the sun's rays to a stationary heater. Frame 84 and motor 88 are shown just below solar concentrator 90. However, depending on the embodiment, frame 84 and motor 88 are displaced from the bottom of solar concentrator 90 to provide space for components associated with heater 10.

In one embodiment, mirror 82 can be tilted horizontally to protect heater 10 during night time hours when no solar energy is available. Furthermore, mirror 82 reflects any radiated energy from or through window 32 back to window 32 to at least partially prevent losses to the night sky.

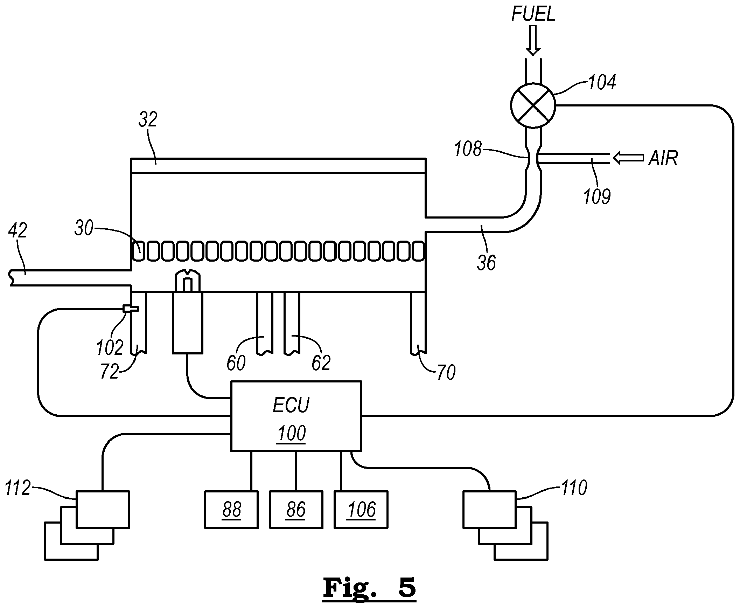

In Figure 5, an electronic control unit (ECU) 100 and associated controllers and sensors are shown. ECU 100 receives input from a thermostatic control 106 or other suitable device to provide a signal to ECU 100 indicative of desired energy input. Outlet 72 of heat exchanger 30 has a thermocouple, thermistor, or other suitable temperature measuring sensor 102 disposed therein to provide to ECU 100 a measure of output temperature. Based on the results of temperature sensor 102 and/or based on other sensors 110 providing signals of conditions within the heater and/or the environment. The amount of pressurized gaseous fuel 104 is supplied to inlet 36 via a venturi 108 which pulls in air 109 in proportion to the fuel quantity. Fuel quantity is metered via a valve 104 with valve 104 commanded by ECU 100. The fuel/air metering arrangement in Figure 5 is but one example for metering the fuel and air.

ECU 100 may also control motors 86 and 88 associated to heliostat 80 for embodiments including a heliostat. ECU 100 may also control other actuators 112 that might be associated with other aspects of the heat pump or heater. ECU 100 is shown as a single unit. However in an alternative embodiment, the functions of ECU 100 are distributed among multiple controllers.

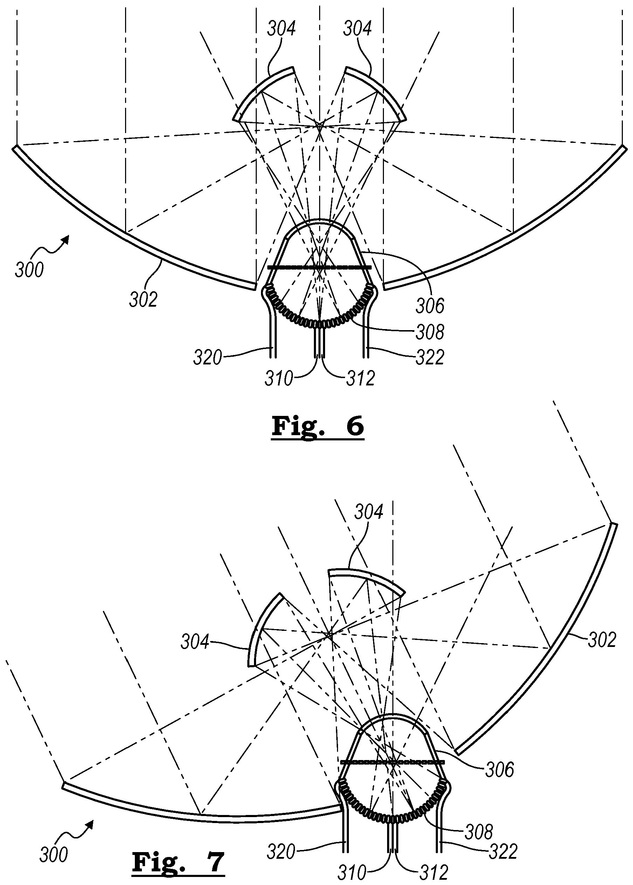

In Figure 1, heater 10 has a nearly flat heat exchanger 30 and a nearly flat window 32 that are parallel to each other. In an alternative embodiment in Figure 6, a solar concentrator 300 has parabolic mirror 302 and two parabolic mirrors 304 disposed above mirror 302. A domed window 306 is provided above heat exchanger 308. Parallel rays entering to mirror 302 nearly all cross the same point that is between and below parabolic mirrors 304. Rays are transmitted through window 306 onto a heat exchanger 308, which is dished. Working fluid is provided to heat exchanger 308 through inlets 310 and 312 and removed from heat exchanger 308 through outlets 320 and 322. An advantage of the embodiment in Figure 6 is that only solar concentrator 300 is moved when tracking the sun. In Figure 7, sun rays coming in at an angle are incident upon mirror 302 and directed onto one of mirrors 304 which direct the rays through window 306 onto heat exchanger 308.

In the embodiment in Figure 1, either a heliostat is provided (such as the example shown in Figure 4) or the entire heater moves to obtain a favorable position with respect to the sun. If the entire heater is moved in relation to the sun, flexible tubing is provided at locations in which a fluid leaves the apparatus. The heater in Figure 1 is advantageous in using a flat window and a flat heat exchanger. The embodiment in Figures 6 and 7 is advantageous in that only solar concentrator 300 is moved to track the sun. However, window 306 and heat exchanger 308 are of a more complicated shape.

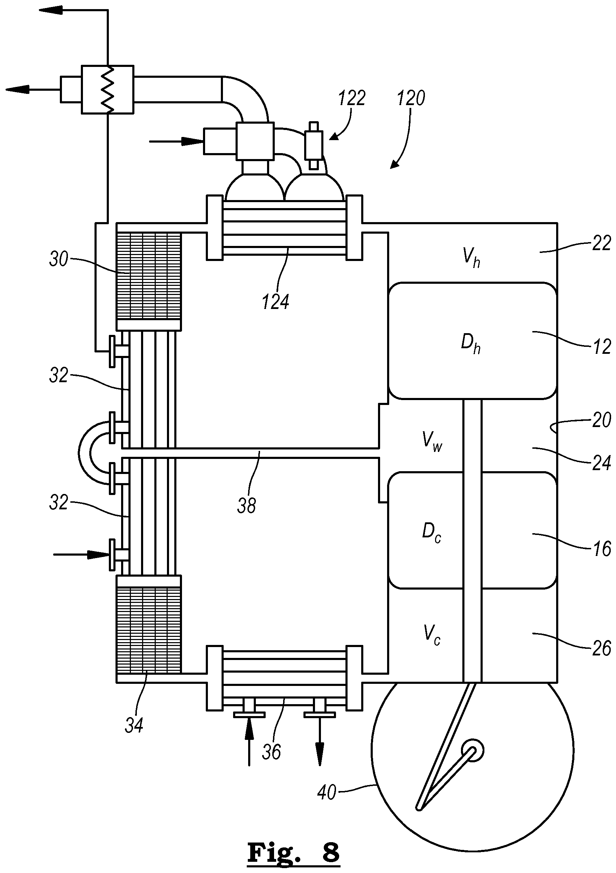

In Figure 8, a Vuilleumier heat pump 120 is shown that has a burner 122 and a heat exchanger 124. (Figure 8 is described in more detail in U.S. application 61/622,547 which is incorporated herein by reference in its entirety.) In place of burner 122 shown in Figure 8, heater 10 of Figure 1 is provided. In another alternative, a Vuillemier heat pump in which the displacers are electromagnetically actuated, as disclosed in U.S. application 61/622,547, is coupled with the burner of Figure 1 of the present disclosure.

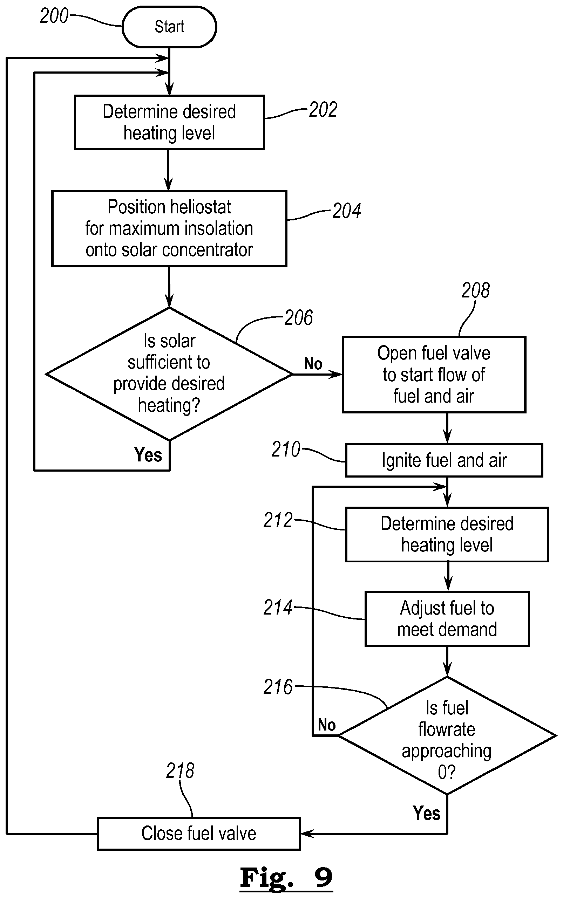

In Figure 9, a control system according to one embodiment of the disclosure starts at 200. In block 202, the amount of heating desired is determined. In block 204, the heliostat is positioned so that maximum insolation is directed on the solar concentrator. In embodiments in which the entire heater is moved to collect the sun, instead of positioning the heliostat, the heater, in particular the solar concentrator, is positioned to provide the maximum insolation onto the heat exchanger. In block 206, it is determined whether the available solar insolation is sufficient to provide the desired heating. If so, control returns to block 202. If not, the burner is started beginning in block 208 in which the fuel valve is opened to provide fuel into the fuel-and-air delivery chamber. The fuel and air are drawn into the combustion chamber through the heat exchanger. The ignitor is commanded to ignite the fuel and air in the combustion chamber in block 210. The desired heating rate is determined in block 212. The fuel flow rate supplied is adjusted in block 214 to meet the present demand. Of course, the energy from combustion supplements the solar energy that is received. Control passes to block 214 in which it is determined whether the fuel is substantially zero. If not, control returns back to block 212 to determine the present demand level. If a positive result in block 216, control passes to block 218 in which the fuel valve is closed to discontinue flow of fuel and air. Control returns to block 202.

As described above, the solar collection system is arranged so as to provide the maximum insolation. However, there could be situations in which the amount of energy provided through the sun's energy is greater than that needed for the heating or cooling demand, the heliostat or solar collector can be adjusted to provide less than the maximum insolation, i.e., when the demand is less than the available solar energy.

While the best mode has been described in detail with respect to particular embodiments, those familiar with the art will recognize various alternative designs and embodiments within the scope of the following claims. While various embodiments may have been described as providing advantages or being preferred over other embodiments with respect to one or more desired characteristics, as one skilled in the art is aware, one or more characteristics may be compromised to achieve desired system attributes, which depend on the specific application and implementation. These attributes include, but are not limited to: cost, strength, durability, life cycle cost, marketability, appearance, packaging, size, serviceability, weight, manufacturability, ease of assembly, etc. The embodiments described herein that are characterized as less desirable than other embodiments or prior art implementations with respect to one or more characteristics are not outside the scope of the disclosure and may be desirable for particular applications.

## Claims

1. A heater assembly, comprising:
a solar concentrator (12);
a heat exchanger (30) comprising at least one tube adapted to carry a working fluid; and
a window (32) arranged between the solar concentrator (12) and the heat exchanger (30); wherein:
the solar concentrator (12) is arranged to direct the sun's rays onto the heat exchanger (30);
wherein the solar concentrator (12) has a collection area many times greater than an area of the window (32); and the heat exchanger (30) is disposed within a chamber (20) defined by:
a window (32), a side wall, and a bottom wall; and
the chamber (20) is separated by the heat exchanger (30) into a fuel-and-air delivery chamber (22) having a fuel-and-air inlet (36) and a combustion chamber (24) having an exhaust outlet (42) arranged such that fuel and air supplied through the fuel-and-air inlet (36) are drawn through gaps in the heat exchanger (30) into the combustion chamber (24), with exhaust gases exiting the combustion chamber (24) via the exhaust outlet (42), wherein the gaps in the heat exchanger (30) are carefully sized to be smaller than the quench distance such that flash back into the fuel-and-air delivery chamber (22) from the combustion in the combustion chamber (24) is prevented.

2. The assembly of claim 1 wherein the window (32) is arranged substantially parallel to the heat exchanger (30).

3. The assembly of claim 1 or 2 wherein: the combustion chamber (24) has an ignitor (44) disposed therein.

4. The assembly of any preceding claim, wherein the at least one tube comprises:
a first tube (50) arranged in a first spiral with an inlet (60) at the center of the first spiral and an outlet (70) at the periphery of the first spiral;
a second tube (52) arranged in a second spiral with an inlet (62) at the center of the second spiral and an outlet (72) at the periphery of the second spiral;
the first and second spirals are entwined with a distance between adjacent tubes (50, 52) being less than a quench distance throughout the spiral; and
the outlets (70, 72) of the first and second tubes (50,52) are arranged substantially diametrically opposed from each other.

5. The assembly of any preceding claim wherein the at least one tube comprises a plurality of tubes with a distance between adjacent tubes being less than a quench distance of the combustible fuel and air.

6. The assembly of any preceding claim, the assembly further comprising:
a positioning system to move one of: a mirror (82) of a heliostat (80), the solar concentrator (12), and the heater assembly so that available rays from the sun are directed into the solar concentrator (12) substantially parallel to a central axis of the solar concentrator (12);
a fuel delivery system having a fuel valve (104) to meter an amount of fuel provided to the fuel-and-air delivery chamber (22);
an air delivery system for metering air provided to the fuel-and-air delivery chamber (22); and
an electronic control unit electronically coupled to the valve (104), the ignitor (44), and the positioning system.

7. The assembly of claim 6 wherein the electronic control unit commands:
positioning one of: a heliostat (80) proximate the solar concentrator (12), the solar concentrator (12), and the heater assembly to cause solar rays to impact the heat exchanger (30);
determining a present heating demand;
supplying fuel and air to the heat exchanger when the solar energy is insufficient to provide the heating demand; and
adjusting the fuel and air flow rate to provide the desired heating demand.

8. The assembly of claim 6 or 7 wherein the electronic control unit actuates the ignitor (44) when a temperature of the heat exchanger is below the ignition temperature of the fuel and air proximate the heat exchanger.

9. The assembly of any one of claims 6 to 8 wherein the electronic control unit:
determines whether the fuel valve (104) is nearly turned off; and
commands the fuel valve to close when it is determined that the fuel valve is nearly turned off.

10. The assembly of any one of claims 6 to 9 wherein the electronic control unit commands the mirror (82) positioning a mirror of the heliostat (80) substantially parallel to the heat exchanger (30) when it is determined that it is night time.

11. A method of operating a heater assembly according to claim 1, the method comprising:
supplying working fluid to the at least one tube of the heat exchanger (30);
utilizing the solar concentrator (12) to transmit the sun's rays to the heat exchanger (30);
supplying fuel and air into the fuel-and-air delivery chamber (22) of the heat exchanger through the fuel-and-air inlet; and
igniting within the combustion chamber (24) the fuel and air drawn through the gaps in the heat exchanger (30).

12. The method according to claim 11 further comprising determining a present heating demand and supplying fuel and air to the heat exchanger (30) when the solar energy is insufficient to meet the demand.

13. The method according to claim 12 comprising adjusting the flow rate of fuel and air based on the demand.

14. The method according to any one of claims 11 to 13 wherein the heater assembly further comprises an ignitor (44) and the method further comprises actuating the ignitor (44) when the temperature of the heat exchanger is below the ignition temperature of the fuel and air.

## Patentansprüche

1. Heizungsanordnung, umfassend:
einen Solarkonzentrator (12);
einen Wärmetauscher (30) umfassend mindestens ein Rohr, das angepasst ist, ein Arbeitsfluid zu befördern; und
ein Fenster (32), das zwischen dem Solarkonzentrator (12) und dem Wärmetauscher (30) angeordnet ist; wobei:
der Solarkonzentrator (12) angeordnet ist, um die Strahlen der Sonne auf den Wärmetauscher (30) zu richten;
wobei der Solarkonzentrator (12) eine Sammelfläche aufweist, die um ein Vielfaches größer ist als eine Fläche des Fensters (32); und
der Wärmetauscher (30) innerhalb einer Kammer (20) angeordnet ist, die definiert ist durch:
ein Fenster (32), eine Seitenwand, und eine Bodenwand; und
wobei die Kammer (20) durch den Wärmetauscher (30) unterteilt ist in eine Brennstoff- und Luftzufuhrkammer (22), die einen Brennstoff- und Lufteinlass (36) aufweist, und eine Brennkammer (24), die einen Abgasauslass (42) aufweist, der so angeordnet ist, dass Brennstoff und Luft, die durch den Brennstoff- und Lufteinlass (36) zugeführt werden, durch Spalten in dem Wärmetauscher (30) mit über den Abgasaustritt (42) aus der Brennkammer (24) austretenden Abgasen in die Brennkammer (24) gezogen werden, wobei die Spalten im Wärmetauscher (30) sorgfältig bemessen sind, um kleiner als der Quenchabstand zu sein, so dass ein Rückschlag in die Brennstoff- und Luftzufuhrkammer (22) aus der Verbrennung in der Brennkammer (24) verhindert wird.

2. Anordnung nach Anspruch 1, wobei das Fenster (32) im Wesentlichen parallel zum Wärmetauscher (30) angeordnet ist.

3. Anordnung nach Anspruch 1 oder 2, wobei:
die Brennkammer (24) einen darin angeordneten Zünder (44) aufweist.

4. Anordnung nach einem der vorstehenden Ansprüche, wobei das mindestens eine Rohr umfasst:
ein erstes Rohr (50), das in einer ersten Spirale mit einem Einlass (60) in der Mitte der ersten Spirale und einem Auslass (70) am Umfang der ersten Spirale angeordnet ist;
ein zweites Rohr (52), das in einer zweiten Spirale mit einem Einlass (62) in der Mitte der zweiten Spirale und einem Auslass (72) am Umfang der zweiten Spirale angeordnet ist;
wobei die erste und zweite Spirale mit einem Abstand zwischen benachbarten Rohren (50, 52) verflochten sind, der kleiner als ein Quenchabstand durch die Spirale hindurch ist; und
wobei die Auslässe (70, 72) der ersten und zweiten Rohre (50, 52) im Wesentlichen diametral entgegengesetzt zueinander angeordnet sind.

5. Anordnung nach einem der vorstehenden Ansprüche, wobei das mindestens eine Rohr eine Vielzahl von Rohren mit einem Abstand zwischen benachbarten Rohren umfasst, der kleiner als ein Quenchabstand des brennbaren Brennstoffs und der Luft ist.

6. Anordnung nach einem der vorstehenden Ansprüche, wobei die Anordnung weiter umfasst:
ein Positionierungssystem zum Bewegen eines aus: einem Spiegel (82) eines Heliostaten (80), dem Solarkonzentrator (12), und der Heizungsanordnung, so dass verfügbare Strahlen der Sonne in den Solarkonzentrator (12) im Wesentlichen parallel zu einer Mittelachse des Solarkonzentrators (12) geleitet werden;
ein Brennstoffzufuhrsystem, das ein Brennstoffventil (104) zum Dosieren einer Brennstoffmenge aufweist, die der Brennstoff- und Luftzufuhrkammer (22) bereitgestellt wird;
ein Luftzufuhrsystem zum Dosieren von Luft, die der Brennstoff- und Luftzufuhrkammer (22) bereitgestellt wird; und
eine elektronische Steuereinheit, die elektronisch mit dem Ventil (104), dem Zünder (44) und dem Positionierungssystem gekoppelt ist.

7. Anordnung nach Anspruch 6, wobei die elektronische Steuereinheit anweist:
Positionieren eines aus: einem Heliostaten (80) in der Nähe des Solarkonzentrators (12), dem Solarkonzentrator (12), und der Heizungsanordnung, um zu bewirken, dass Sonnenstrahlen auf den Wärmetauscher (30) auftreffen;
Bestimmen eines gegenwärtigen Wärmebedarfs;
Zuleiten von Brennstoff und Luft zu dem Wärmetauscher, wenn die Sonnenenergie nicht ausreicht, um den Wärmebedarf bereitzustellen; und
Einstellen der Brennstoff- und Luftdurchflussrate, um den gewünschten Wärmebedarf bereitzustellen.

8. Anordnung nach Anspruch 6 oder 7, wobei die elektronische Steuereinheit den Zünder (44) betätigt, wenn in der Nähe des Wärmetauschers eine Temperatur des Wärmetauschers unter der Zündtemperatur des Brennstoffs und der Luft liegt.

9. Anordnung nach einem der Ansprüche 6 bis 8, wobei die elektronische Steuereinheit:
bestimmt, ob das Brennstoffventil (104) fast ausgeschaltet ist; und
das Brennstoffventil anweist, zu Schließen, wenn festgestellt wird, dass das Brennstoffventil fast ausgeschaltet ist.

10. Anordnung nach einem der Ansprüche 6 bis 9, wobei die elektronische Steuereinheit den Spiegel (82) anweist, einen Spiegel des Heliostaten (80) im Wesentlichen parallel zu dem Wärmetauscher (30) zu positionieren, wenn festgestellt wird, dass es Nachtzeit ist.

11. Verfahren zum Betreiben einer Heizungsanordnung nach Anspruch 1,
wobei das Verfahren umfasst:
Zuleiten von Arbeitsfluid zu dem mindestens einen Rohr des Wärmetauschers (30);
Verwenden des Solarkonzentrators (12), um die Strahlen der Sonne zu dem Wärmetauscher (30) zu übertragen;
Zuleiten von Brennstoff und Luft in die Brennstoff- und Luftzufuhrkammer (22) des Wärmetauschers durch den Brennstoff- und Lufteinlass; und
Zünden des durch die Spalten in dem Wärmetauscher (30) gezogenen Brennstoffs und der Luft innerhalb der Brennkammer (24).

12. Verfahren nach Anspruch 11, weiter umfassend Bestimmen eines gegenwärtigen Heizbedarfs und Zuleiten von Brennstoff und Luft zu dem Wärmetauscher (30), wenn die Sonnenenergie nicht ausreicht, um den Bedarf zu decken.

13. Verfahren nach Anspruch 12, umfassend das Einstellen der Durchflussrate von Brennstoff und Luft, basierend auf dem Bedarf.

14. Verfahren nach einem der Ansprüche 11 bis 13, wobei die Heizungsanordnung weiter einen Zünder (44) umfasst und das Verfahren weiter die Betätigung des Zünders (44) umfasst, wenn die Temperatur des Wärmetauschers unter der Zündtemperatur des Brennstoffs und der Luft liegt.

## Revendications

1. Ensemble de chauffage, comprenant :
un concentrateur solaire (12) ;
un échangeur de chaleur (30) comprenant au moins un tube adapté pour transporter un fluide de travail ; et
une fenêtre (32) agencée entre le concentrateur solaire (12) et l'échangeur de chaleur (30) ; dans lequel :
le concentrateur solaire (12) est agencé pour diriger les rayons du soleil sur l'échangeur de chaleur (30) ;
dans lequel le concentrateur solaire (12) comprend une surface de collecte plusieurs fois supérieure à une surface de la fenêtre (32) ; et
l'échangeur de chaleur (30) est disposé à l'intérieur d'une chambre (20) définie par :
une fenêtre (32), une paroi latérale, et une paroi inférieure ; et
la chambre (20) est séparée par l'échangeur de chaleur (30) en une chambre de distribution de combustible et d'air (22) ayant une entrée de combustible et d'air (36) et une chambre de combustion (24) ayant une sortie d'échappement (42) agencées de telle sorte que le combustible et l'air alimentés à travers l'entrée de combustible et d'air (36) sont aspirés à travers des espacements dans l'échangeur de chaleur (30) à l'intérieur de la chambre de combustion (24), les gaz d'échappement quittant la chambre de combustion (24) via la sortie d'échappement (42), dans lequel les espacements dans l'échangeur de chaleur (30) sont soigneusement dimensionnés de manière à être plus petits que la distance d'auto-extinction de sorte que le retour de flamme dans la chambre de distribution de combustible et d'air (22) provenant de la combustion dans la chambre de combustion (24) soit évité.

2. Ensemble selon la revendication 1, dans lequel la fenêtre (32) est agencée sensiblement parallèlement à l'échangeur de chaleur (30).

3. Ensemble selon la revendication 1 ou 2, dans lequel :
la chambre de combustion (24) a un dispositif d'allumage (44) disposé dans celle-ci.

4. Ensemble selon l'une quelconque des revendications précédentes, dans lequel l'au moins un tube comprend :
un premier tube (50) agencé en une première spirale avec une entrée (60) au centre de la première spirale et une sortie (70) à la périphérie de la première spirale ;
un second tube (52) agencé en une seconde spirale avec une entrée (62) au centre de la seconde spirale et une sortie (72) à la périphérie de la seconde spirale ;
les première et seconde spirales sont entrelacées avec une distance entre tubes adjacents (50, 52) inférieure à une distance d'auto-extinction à travers la spirale ; et
les sorties (70, 72) des premier et second tubes (50, 52) sont agencées sensiblement de manière diamétralement opposée l'une à l'autre.

5. Ensemble selon l'une quelconque des revendications précédentes, dans lequel l'au moins un tube comprend une pluralité de tubes avec une distance entre tubes adjacents inférieure à une distance d'auto-extinction du combustible et de l'air.

6. Ensemble selon l'une quelconque des revendications précédentes, l'ensemble comprenant en outre :
un système de positionnement pour déplacer l'un parmi : un miroir (82) d'un héliostat (80), le concentrateur solaire (12) et l'ensemble de chauffage de sorte que les rayons de soleil disponibles soient dirigés dans le concentrateur solaire (12) sensiblement parallèlement à un axe central du concentrateur solaire (12) ;
un système de distribution de combustible ayant une soupape à combustible (104) pour doser une quantité de combustible fournie à la chambre de distribution de combustible et d'air (22) ;
un système de distribution d'air pour doser l'air fourni à la chambre de distribution de combustible et d'air (22) ; et
une unité de commande électronique électroniquement couplée à la soupape (104), au dispositif d'allumage (44) et au système de positionnement.

7. Ensemble selon la revendication 6, dans lequel l'unité de commande électronique commande :
le positionnement de l'un parmi : un héliostat (80) proche du concentrateur solaire (12), le concentrateur solaire (12) et l'ensemble de chauffage, de sorte à amener les rayons du soleil à heurter l'échangeur de chaleur (30) ;
la détermination d'une demande de chauffage actuelle ;
l'alimentation en combustible et en air de l'échangeur de chaleur lorsque l'énergie solaire est insuffisante pour satisfaire la demande de chauffage ; et
le réglage du débit de combustible et d'air pour satisfaire la demande de chauffage désirée.

8. Ensemble selon la revendication 6 ou 7, dans lequel l'unité de commande électronique active le dispositif d'allumage (44) lorsqu'une température de l'échangeur de chaleur est inférieure à la température d'allumage du combustible et de l'air à proximité de l'échangeur de chaleur.

9. Ensemble selon l'une quelconque des revendications 6 à 8, dans lequel l'unité de commande électronique :
détermine si la soupape à combustible (104) est quasiment fermée ; et
commande la fermeture de la soupape à combustible lorsqu'il est déterminé que la soupape à combustible est quasiment fermée.

10. Ensemble selon l'une quelconque des revendications 6 à 9, dans lequel l'unité de commande électronique commande le miroir (82) en positionnant un miroir de l'héliostat (80) sensiblement parallèlement à l'échangeur de chaleur (30) lorsqu'il est déterminé qu'il fait nuit.

11. Procédé de commande d'un ensemble de chauffage selon la revendication 1, le procédé comprenant :
l'alimentation en fluide de travail d'au moins un tube de l'échangeur de chaleur (30) ;
l'utilisation du concentrateur solaire (12) pour transmettre les rayons du soleil à l'échangeur de chaleur (30) ;
l'alimentation en combustible et en air à l'intérieur de la chambre de distribution de combustible et d'air (22) de l'échangeur de chaleur à travers l'entrée de combustible et d'air ; et
l'allumage, à l'intérieur de la chambre de combustion (24), du combustible et de l'air aspirés à travers les espacements dans l'échangeur de chaleur (30).

12. Procédé selon la revendication 11, comprenant en outre la détermination d'une demande de chauffage actuelle et l'alimentation en combustible et en air de l'échangeur de chaleur (30) lorsque l'énergie solaire est insuffisante pour satisfaire la demande.

13. Procédé selon la revendication 12, comprenant le réglage du débit de combustible et d'air en fonction de la demande.

14. Procédé selon l'une quelconque des revendications 11 à 13, dans lequel l'ensemble de chauffage comprend en outre un dispositif d'allumage (44)
et le procédé comprend en outre l'actionnement du dispositif d'allumage (44) lorsque la température de l'échangeur de chaleur est inférieure à la température d'allumage du combustible et de l'air.
